# EUROPEAN PATENT APPLICATION

(11) **EP 4 467 001 A1**
(43) Date of publication of application: **27.11.2024**
(21) Application number: 23175018.3
(22) Date of filing: 24.05.2023
(51) Int. Cl.: A22C 11/12, B25C 5/16, B27F 7/38, B65B 51/05

(54) **MAGAZINE BAR FOR CLIPPING MACHINE AND METHOD FOR ITS PRODUCTION**

(71) Applicant: Poly-clip System GmbH & Co. KG, 65795 Hattersheim (DE)
(72) Inventor: Beyer, Silvio, 65795 Hattersheim (DE)
(74) Representative: Eisenführ Speiser

(57) **Abstract**

The invention relates to a magazine bar (1) for a clipping machine for temporarily storing and delivering closure clips (13) to the clipping machine, wherein the magazine bar (1) has a longitudinal axis (A) extending from a magazine bar inlet end (9) to a magazine bar outlet end (11) and comprises a storage rail (3) having a guiding surface for guiding closure clips; and a retaining rail (5) opposite the storage rail (3), wherein the retaining rail (5) is spaced apart from the storage rail (3) in a first direction (R1) such that a storage region (15) for closure clips (13) is formed at least between the storage rail (3) and the retaining rail (5), and wherein at least the storage rail (3) and the retaining rail (5) of the magazine bar (1) are integrally formed. The invention further relates to a method (100) for producing a magazine bar (1).

## Description

The invention relates to a magazine bar for a clipping machine for temporarily storing and delivering closure clips to the clipping machine, wherein the magazine bar has a longitudinal axis extending from a magazine bar inlet end to a magazine bar outlet end. The invention further relates to a method for producing a magazine bar for a clipping machine. In particular, the invention concerns a magazine bar for a clipping machine as set forth in claim 1 and a method for producing a magazine bar for a clipping machine as set forth in claim 13.

Clipping machines are used for producing sausage-shaped products, like sausages. To produce such products, filling material is fed into a tubular packaging casing which is stored as a supply on a filling tube, and which is closed at its front end by at least one closure clip. Filling material is filled into tubular packaging casing through the filling tube and the feeding pressure of the filling material draws the casing from the filling tube. After a predetermined portion of filling material has been fed into the tubular packaging casing, a plait-like portion being at least substantially free from filling material is formed thereto. At least one first closure clip is placed and closed on said plait-like portion by a clipping device, for closing the packaging casing just filled. Additionally, at least one second closure clip may be placed for closing the front end of the sausage-shaped product to be produced next. Subsequently, the sausage-shaped product just produced is separated from the remaining supply of packaging casing and the completed sausage-shaped product is discharged from the clipping machine.

There are different types of closure clips and different ways of storing and providing closure clips to a clipping machine. One way of providing the closure clips is by assembling them together to form a clip strip in such a way that the clips bear against each other with their clip planes and by temporarily connecting the assembled clips, for example by means of an adhesive tape at the clip backs. Such clip strips are referred to as S-clips in the art. The clipping machine separates the closure clips individually from such a clip strip for a clipping operation. The closure clips can be substantially U-shaped, with parallel or divergent clip legs or limbs and with a round or flat clip back. They can, however, also be of a shape which differs from the U-shape.

A clip strip is placed on a magazine bar, which stores the clips temporarily and delivers them to the clipping machine. A clipping machine may comprise a single magazine bar or two or even more magazine bars for storing multiple clip strips. Clipping machines for single clip operation are referred to as single-clipping machines, while clipping machines having two magazine bars are referred to as double-clipping machines. When feed of a clip strip to a removal location of the magazine bar or a clip inlet of a clipping machine respectively is to be effected by the force of gravity acting on the clip strip, magazine bars are usually inclined with respect to the horizontal or oriented perpendicular thereto. The longitudinal axis extending from the magazine bar inlet end is angled with respect to the horizontal, preferably substantially vertically in a plane oriented in orthogonal relationship with a foundation or floor. A substantially vertical orientation however is also appropriate solely for reasons of space.

As already mentioned, in practice the magazine bars usually have to be arranged substantially vertically or at least with a sufficiently high angle of inclination, of at least a portion of their longitudinal axis, with respect to the horizontal, so that the clip strip or closure clips can be fed to the removal location of the clipping machine solely by the force of gravity acting thereon. In practice, magazine bars are used which in the mounted condition project far above the eye level of operators standing on the ground. This makes assembly of the magazine bar on the clipping machine difficult.

Moreover, clipping machines are usually used at high cycle rates to produce large quantities of sausage-shaped products. Production down times need to be reduced as much as possible to ensure an economic production process. Secure storage of closure clips on the magazine bar as well as reliable delivery of the closure clips to the clipping machine is of utmost importance. Conventional magazine bars therefore comprise some kind of securing means that prevent the closure clips of the clip strip respectively from falling off of the magazine bar.

EP 2 294 921 A1 discloses a magazine bar for a clipping machine for temporarily storing and delivering closure clips which are assembled together to provide at least one clip strip, comprising a first and a second frontal magazine bar end, and a storage region which extends between the two magazine bar ends and into which a clip strip can be fed by way of a first loading location and from which a clip can be discharged in the discharge direction by way of a removal location provided at the second frontal magazine bar end. The magazine bar comprises a storage region for receiving the clip strip. The storage region comprises a guide rail and a securing means spaced apart from the guide rail. Moreover, the known magazine bar comprises multiple connectors connecting the guide rail and the securing means and additional brackets for fixing the magazine bar to the clipping machine. Even though reliable in use, assembly of the magazine bar takes time and is prone to error, in particular since magazine bars are usually located at places of clipping machines that are hard to reach. Moreover, known magazine bars are often heavy and have high manufacturing and/or assembly costs.

Accordingly, it is an object of the present invention to provide a magazine bar that facilitates assembly and/or which allows for a reduction of manufacturing and/or assembly costs while ensuring reliable operation of the clipping machine. It is a further object of the invention to provide a method for producing such a magazine bar.

In a first aspect, the present invention solves this problem with a magazine bar according to claim 1. Claims 2 to 12 which are dependent to claim 1 set forth advantageous configurations. In particular, the present invention solves the above stated problem with a magazine bar for a clipping machine for temporarily storing and delivering closure clips to the clipping machine, wherein the magazine bar has a longitudinal axis extending from a magazine bar inlet end to a magazine bar outlet end and comprises a storage rail having a guiding surface for guiding closure clips; and a retaining rail opposite the storage rail, wherein the retaining rail is spaced apart from the storage rail in a first direction extending at least approximately perpendicular to the longitudinal axis such that a storage region for closure clips is formed at least between the storage rail and the retaining rail, and wherein at least the storage rail and the retaining rail of the magazine bar are integrally formed.

The magazine bar inlet end is the section of the magazine bar through which closure clips or a strip of closure clips may be inserted into the storage region. The magazine bar inlet end may thus be or comprise an opening of the storage region. Preferably, the magazine bar comprises more than one magazine bar inlets. In this case, the longitudinal axis preferably extends from the magazine bar inlet end, which is located furthest away from the magazine bar outlet end. Closure clips received in the storage region travel through the storage region substantially along the longitudinal axis of the magazine bar. At the magazine bar outlet end, the closure clips are delivered to the clipping machine or a clip inlet of the clipping machine. It shall be noted, that the longitudinal axis must not be straight, but can be straight. Preferably, the longitudinal axis comprises at least one bend. A bend connects two straight sections of the magazine bar. The longitudinal axis may also form a continuous curve.

The storage rail is preferably configured for guiding the closure clips or clip strips along the longitudinal axis through the storage region. Preferably, the storage rail comprises a head portion that is adapted to and/or a negative of the clip back of the closure clips. The cross-section of the storage rail may be adapted to the geometry of the closure clips. Preferably, the guide rail is configured to be at least partially inserted between the legs of the closure clips. For example, if the clips are substantially U-shaped, the storage rail may have a corresponding arc-shape fitting into the U-shape of the clips. The retaining rail is arranged opposite the storage rail and spaced apart therefrom in a first direction. The first direction is measured substantially transverse to the longitudinal axis of the magazine bar. The storage region is at least partially formed by the free space between the storage rail and the retaining rail. Both rails preferably extend substantially parallel to the longitudinal axis and/or to each other. The storage region is a free space that can receive the closure clips. When the closure clips are received on the storage rail, the retaining rail prevents the clips from falling off the storage rail in the first direction.

The storage rail and the retaining rail of the magazine bar are integrally formed. Through this, assembly of the magazine bar is substantially facilitated. Moreover, a risk for incorrect assembly of the magazine bar is reduced. Integrally formed storage and retaining rails can be fixed to a clipping machine in a single step. Alignment steps of the respective rails to each other are not necessary. This ensures proper alignment and reduces the risk of clip jams in the storage region that may result from storage region having an inconsistent shape. Since, the retaining rail and the storage rail are integrally formed, they cannot unintentionally separate either during assembly or during sausage production performed by the clipping machine. Reliability of the sausage production system incorporating the inventive magazine bar is improved. Furthermore, integrally formed rails may be less likely to vibration induced damages, since there are less elements moving separately to each other during operation of the clipping machine, which may transmit vibrations onto the magazine bar. An integrally formed storage rail and retaining rail may also significantly reduce vibration induced noise. It shall be understood, that the magazine bar may comprise further elements that may or may not be integrally formed with the storage rail and the retaining rail.

In a first preferred embodiment, the magazine bar is formed from a base material, preferably a plastic base material, by additive manufacturing. Additive manufacturing references technologies that grow three-dimensional objects one layer at a time. Each successive layer bonds to the preceding layer of linked base material. During 3D-printing a nozzle or print head deposits material upon the preceding layer. In other techniques, a laser or electron beam selectively melts or partially melts in a bed of base material. In still other techniques, a laser or other light source links a liquid base material. As materials cool or are cured, they fuse together to form a three-dimensional object. Quality of the finished products usually depends on the thickness of the individual layers. Smaller layers usually lead to higher surface quality. However, manufacturing time increases when the layer thickness is reduced. Preferably, the magazine bar is formed by selective laser sintering (SLS). The base material may be a metallic base material. However, preferably, the base material is a plastic base material. Use of a plastic base material results in a lighter end product compared to metallic base materials. The inventors have found that even though plastic base materials are usually less hard then metal materials, a sufficient life cycle time may be achieved for a magazine bar formed from a plastic base material. Moreover, plastic base materials are usually more cost efficient, less dangerous to health and allow for higher production speeds. The plastic base material preferably is or comprises Polyamide (PA) and/or Thermoplastic Polyurethane (TPU). The plastic base material preferably comprises a filler, particularly preferred a glass, aluminium and/or carbon filler. A magazine bar formed by additive manufacturing may have curves or bends and still have a substantially uniform storage region. In contrast to that, conventional magazine bars are formed by bending solid material which results in inconsistencies such as bulges on inner radii. These inconsistencies may lead to closure clips jamming the storage region. Additive manufacturing the magazine bar thus increases reliability of clip delivery.

Preferably, the base material and/or the magazine bar formed from the base material has one or more of the following properties: low hygroscopicity of 0.2 to 2 wt-% (% by weight); operating temperature range from -10°C to 70°C; coefficient of linear thermal expansion of 110 * 10⁻⁶ 1/K or less; dielectric constant of 3.8 or less, preferably 3.1 or less; coefficient of friction (sticking friction and/or dynamic friction) of 0.4 or less; UV-resistance, in particular high UV-resistance; solvent resistance; resistance to cleaning agents; high chemical resistance; low outgassing, high purity; heat conductivity of 0.15 W/mK or more, preferably 0.2 W/mK or more, preferably 0.25 or more; shore hardness of 65 or higher, preferably 70 or higher; and/or melting temperature above 100°C. Low hygroscopicity of 0.2 to 2.0 wt-% is preferably measured according to DIN 53495 and/or measured after storing a sample for 7 days at 23°C and 96% relative humidity. Preferably wt-% is based on the total weight of the composition. In the long term operating temperature range the material is stable, preferably not brittle. The linear thermal expansion is preferably measured according to DIN 53752. The dielectric constant is preferably measured according to IEC 60250. Chemical resistance preferably includes resistance against weak organic acids, strong organic acids, alcohols, acetone, hydrocarbons, weak lye and/or strong lye. Heat conductivity is preferably measured according to ISO 22007.

The inventors have found that a magazine bar may be formed by additive manufacturing although official regulations pose strict requirements on components used in food production. For example, clipping machines used in food production need to be thoroughly cleaned every day or after each use if the products to be produced is different from those just made. Typically, harsh basic and/or acidic cleaning liquids are used for cleaning the clipping machine and the magazine bar. A base material and/or a magazine bar having one or more, preferably all of the above properties is particularly suited to fulfill official regulations and operating conditions resulting therefrom.

In a preferred further development, the magazine bar is formed by additive manufacturing from a powdered base material. When printing the magazine bar from a powdered base material, cavities inside the magazine bars profile may be printed without or with less support structures. This reduces or eliminates the need to remove these support structures after additive manufacturing of the magazine bar. The storage region or the surfaces of the storage rail and the retaining rail defining the storage region respectively are less likely to have roughnesses or inconsistencies that prevent the closure clips from sliding along the longitudinal axis of the magazine bar. It is less likely that closure clips jam the storage region. Reliability of the production process is increased and manufacturing downtimes are reduced. Moreover, manufacturing cost may be reduced as well. It shall be understood that a powdered base material is any base material having a grain like structure, such as sand. Powdered base material does not imply a maximum or minimum grain size as such. Therefore, a powdered base material may be a granulate material or of a finer texture, for example, such as flour or sand.

Preferably, the magazine bar has a surface roughness of Ra 25 or less, preferably Ra 22.5 or less, preferably Ra 20 or less, preferably Ra 17.5 or less, preferably Ra 15.0 or less, preferably Ra 12.5 or less, preferably Ra 10.0 or less, preferably Ra 9.0 or less, preferably Ra 8.0 or less, preferably Ra 7.5 or less, preferably Ra 7.0 or less, preferably Ra 6.5 or less, preferably Ra 6.0 or less, preferably Ra 5.5 or less, preferably Ra 5.0 or less, preferably Ra 4.5 or less, preferably Ra 4.0 or less, preferably Ra 3.5 or less, preferably Ra 3.0 or less, preferably Ra 2.5 or less, preferably Ra 2.25 or less, preferably Ra 2.0 or less, preferably Ra 1.75 or less, preferably Ra 1.5 or less, preferably Ra 1.25 or less, preferably 1.0 or less according to DIN EN ISO 4287:2010 (in µm). The preferred surface roughness may be achieved by finishing the magazine bar after additive manufacturing, preferably by shot peening, frictional grinding and/or thermos-chemically smoothing.

Preferably, the storage rail comprises a closed chamber. In the context of the present invention a closed chamber is sealed towards the environment. A closed chamber is sealed so that dirt or other substances commonly present during use of a clipping machine cannot enter into the closed chamber. The closed chamber may also be referred to as a cavity. Preferably, the closed chamber extends at least through 50 % or more, preferably 60 % or more, preferably 70% or more, preferably 80% or more, particularly preferred 90 % or more of the storage rail measured along the longitudinal axis of the magazine bar. Particularly preferred, the closed chamber extends substantially entirely along the storage rail and is closed off at the magazine bar outlet end and the magazine bar inlet end by respective end walls. Providing the cavity significantly reduces manufacturing time of the magazine bar, since less base material needs to be linked during the manufacturing process. As the chamber is closed towards the environment, no dirt or food residues may enter into the chamber and hygienic production off sausage-shaped products is ensured. Moreover, cleaning of the magazine bar after a production day is facilitated.

In a preferred embodiment, the closed chamber is at least partially filled with unlinked base material. During manufacturing, the base material is linked together, for example fused together, to form solid structures of the magazine bar. Unlinked base material is base material that has not been fused together or otherwise been connected during the manufacturing process of the magazine bar. For example, when selective laser sintering is used for manufacturing the magazine bar, the unlinked base material has not been directly targeted by laser light during manufacturing. When allowing unlinked base material to remain in the closed chamber, the magazine bare may be formed in a single manufacturing step without the need to remove base material from the chamber before closing it off. Manufacturing is facilitated. Moreover, the unlinked base material strengthens the chamber as it supports the walls defining it. In addition, the unlinked base material has a dampening function and may absorb shocks or vibrations such that stability of the magazine bar may be increased and/or vibratory noise may be reduced. During manufacturing and/or during use, the unlinked base material supports the walls of the chamber so that no additional support structures are required. As the base material is not linked or fused, manufacturing time is significantly reduced resulting in reduced overall cost of the magazine bar.

Preferably, a retaining width of the retaining rail perpendicular to the first direction is equal or larger than a corresponding storage width of the storage rail. The retaining rail and the storage rail are arranged opposite from each other and spaced apart in the first direction. The second direction is substantially perpendicular to the first direction and substantially perpendicular to the longitudinal direction of the magazine bar defined along the longitudinal axis. The storage width of the storage rail may be substantially identical to an inner width of the closure clips to be stored thereon. It shall be noted that the storage width of the storage rail may be a little smaller than the inner width of the closure clips such that the clips may freely slide along the storage rail. A retaining width of the retaining rail being equal to or larger than the storage width prevents tilting of clips received in the storage region. Legs of the clips may be prevented from scraping along the storage rail and overall life time of the storage rail is increased. Moreover, the risk of closure clips jamming the storage region is reduced. The storage width corresponds to the retaining width such that they are measured in the same plane and measured substantially parallel to each other. The storage width is measured at the widest section of the storage rail that engages the closure clips.

In a preferred embodiment, the storage rail tapers away from the retaining rail. The storage rail preferably tapers in the first direction. A storage rail tapering away from the retaining rail reduces in width such that a wider section of the storage rail is located more proximate to the retaining rail than a relatively thinner section. In case of substantially U-shaped closure clips received on the storage rail, the storage rail then tapers away from a clip back. It may be sufficient if only one portion or wall of the storage rail tapers away from the retaining rail. For example, a first wall section of the storage rail may be parallel to the first direction while a second wall section opposite the first wall section tapers away from the retaining rail along the first direction. The tapered shape allows for a lighter storage rail that can be manufactured in less time. By tapering the storage rail away from the retaining rail a free room for legs of the closure clips may be increased such that it is less likely that legs of the closure clips received in the storage region touch the storage rail. Wear on the storage rail may be reduced. Preferably, a first side of the storage rail is substantially straight and extends along the first direction while an opposite second side of the storage rail tapers away from the retaining rail.

Preferably, the magazine bar has a continuous outer contour in at least one cross-section, preferably at least 70%, more preferably at least 80%, most preferably at least 90% of all cross-sections of the magazine bar along the longitudinal axis. The storage region is defined by the inner contour and consequently is or comprises a cavity that is configured to at least partially receive a closure clip. For example, at least one leg of a closure clip may be received in the storage region defined by the inner contour while an opposite leg of this clip may extend outside of the storage region. In a macroscopic view or when viewed with the bare eye a continuous outer contour has no sharp edges. Preferably, a portion of the storage rail defining the outer contour tapers away from the retaining rail. Additionally or alternatively a second portion of the storage rail opposite the first portion and at least partially defining the inner contour is at least partially straight in the first direction. A continuous outer contour may be defined by a continuous mathematical function.

In a preferred further development, the storage region is substantially L-shaped. The storage region preferably has the form of an inverse letter "L". Particularly preferred, a smaller leg of the L-shape is defined by a space between the storage rail and the retaining rail. The larger leg of the L-shape preferably extends substantially parallel to the storage rail in the first direction. The legs of the L-shape may also be substantially identical in length or the longer leg may be defined between the storage rail and the retaining rail while the shorter leg extends parallel to the storage rail.

Preferably, the magazine bar has an asymmetrical cross-section. The cross-section is viewed in a plane angled towards the longitudinal axis. Particularly preferred, the cross-section is substantially perpendicular to the longitudinal axis. Preferably, the cross-section is asymmetrical to an axis parallel to the first direction. A magazine bar having an asymmetrical cross-section can ensure proper guidance of closure clips along the storage region, in particular from the magazine bar inlet end to the magazine bar outlet end. At the same time an asymmetrical cross-section allows for a lighter design that can be produced in less time. For example and preferably, it may be sufficient if only one leg of a closure clip is received in the storage region and guided therein while the opposite leg may be arranged outside the storage region. Moreover, a magazine bar having an asymmetrical cross-section may allow for easy access to the closure clips received in the storage region. A user can easily reposition or loosen a jammed closure clip. An overall reliability of a production system incorporating the inventive magazine bar is increased.

According to a preferred embodiment, the magazine bar further comprises a connecting portion connecting the storage rail and the retaining rail. The storage rail, the retaining rail and the connecting portion preferably form a C-shape or G-shape in a cross-section angled, particularly preferred substantially perpendicular, to the longitudinal axis. Preferably, the connecting portion extends along at least 50%, preferably at least 60%, preferably at least 70%, preferably at least 80%, preferably at least 85%, preferably at least 90% of the length of the magazine bar measured along the longitudinal axis. Particularly preferred, the connecting portion extends substantially along the entire length of the magazine bar measured along the longitudinal axis. The connecting portion preferably extends substantially along the first direction. In a preferred further development, a storage rail wall thickness is smaller than a connecting portion wall thickness. It shall be noted that a storage rail wall thickness may be smaller than a connecting portion wall thickness even though a width of the storage rail is larger than a corresponding width of the connecting portion, since the storage rail may comprise the closed chamber. However, it shall be understood that the connecting portion may also comprise a cavity or chamber. It is also preferred that only the connecting portion has a cavity or chamber while the storage rail is substantially solid. Preferably, the connecting portion widens towards the retaining rail.

Preferably, the connecting portion extends from the magazine bar inlet end to the magazine bar outlet end along the longitudinal axis. The connecting portion(s) may comprise one or more windows and/or the connecting portion may be omitted in one or more longitudinal sections of the magazine bar. Sections in which the connecting portion is omitted may also be referred to as connecting portion interruptions. It shall be understood that windows in the connecting portion(s) and/or connecting portion interruptions may be present for magazine bars having a connecting portion extending from the magazine bar inlet end to the magazine bar outlet end (with the exception of the connecting portion interruptions) as well as for magazine bars having a connecting portion extending only partially along the longitudinal axis. A connecting portion interruption and/or window lies between two sections having a connecting portion in a longitudinal direction of the magazine bar. In a connecting portion interruption the connecting portion is completely omitted while it is only partially cut out in a window. The connecting portion may extend in individual sections along the longitudinal axis. In such embodiments, the retaining rail and the storage rail preferably extend entirely along the longitudinal axis.

Windows and/or or connecting portion interruptions may be used for providing a clip drive to the magazine bar. Preferably, the magazine bar comprises such a clip drive. A clip drive is configured to move clips received in the storage region of the magazine bar along the longitudinal axis. Preferably, the clip drive is configured to engage both legs of a closure clip. This ensures uniform movement of the clips and prevents the clips from jamming the storage region. To allow engagement of both legs of a closure clip by a clip drive, the clip drive is preferably arranged at a window and/or a section of the magazine bar in which the connecting portion is omitted or a connecting portion interruption respectively. However, a clip drive may be provided even if the connecting portion extends entirely along the longitudinal axis of the magazine bar and has no windows or interruptions. For example, the clip drive could engage a bottom of closure clips opposite the storage rail. Preferably, the clip drive is integrated into the retaining rail, the storage rail and/or the connecting portion. It shall be understood that the features of a clip drive and windows / connecting portion interruptions may be provided independently from each other.

In preferred further developments, the retaining rail comprises one or more interruptions along the central longitudinal axis. Such interruptions may be portions along the central longitudinal axis in which a cross-section of the magazine bar only comprises the storage rail while the retaining rail is fully or partially omitted in sections. For example, a first retaining rail section can extend substantially parallel to the storage rail from the magazine bar inlet end to a first interruption along the longitudinal axis and a second retaining rail section extends from the interruption to the magazine bar outlet end. The interruption can serve as a loading location for closure clips and/or a space for arranging a clip drive. Preferably, the magazine bar comprises a clip drive arranged at an interruption of the retaining rail. The clip drive preferably comprises a drive wheel configured to engage clip bottoms of closure clips received on the storage rail and to move the clips along the central longitudinal axis.

According to a preferred embodiment, the connecting portion is arranged only on a retaining side of the storage rail. The connecting portion preferably extends in the first direction from a transition portion of the storage rail towards the retaining rail. The retaining side of the storage rail is oriented towards a leg of a closure clip, if the clip is received in the storage region. Preferably, the connecting portion is only arranged on the retaining side such that a side of the storage rail opposite the retaining side is a free side, which is not connected to the connecting portion. A connecting portion extending on only one side of the retaining rail is one way of achieving an asymmetrical cross-section of the magazine bar. Moreover, since the connecting portion is arranged only on one side of the storage rail, the storage region is accessible by a user, for example for repositioning jammed clips or for removing clips from the storage region. Preferably, the connecting portion is arranged only on a retaining side of the storage rail such that a first leg of a closure clip can be received in the storage region while an opposite second leg of the closure clip is located outside the storage region. Preferably, the connecting portions extends substantially parallel to the retaining side of the storage rail. A transition portion of the retaining rail extending at an angle from the portion of the storage rail defining the retaining side may connect the connecting portion to the retaining side of the storage rail. Preferably, the retaining side of the storage rail, the transition portion of the storage rail and the connecting portion define a U-shaped portion of the storage region, particularly preferred a U-shaped portion of the storage region configured to receive a leg of a closure clip.

The magazine bar, preferably the retaining rail and/or the storage rail, may comprise at least one locking hole. The locking hole preferably extends into the storage region. The locking hole may be configured to receive a locking element. The locking element may extend into the storage region for blocking movement of closure clips received in the storage region along the central longitudinal axis. For example, a leg of a closure clip may be inserted through the locking hole into the storage region to block delivery of clips from the magazine bar to a clipping machine. Preferably, the locking hole is provided between a bend of the magazine bar and the magazine bar outlet end. Preferably, the locking hole is provided in a substantially horizontal portion of the magazine bar. The locking hole may extend through the retaining rail in a direction perpendicular to the longitudinal axis and/or in the first direction. The locking hole provides a possibility to temporarily block clip delivery which may be useful during reloading of clips, during assembly, in case of a jammed clip or in various other cases.

In a second aspect, the invention solves the above mentioned problem with a method for producing a magazine bar for a clipping machine for temporarily storing and delivering closure clips to a clip inlet of the clipping machine, particularly preferred a magazine bar according to the first aspect of the invention. The method comprises the steps of: providing a base material and additive manufacturing a magazine bar blank from the base material selectively linking the base material. Preferably, the method further comprises one or more of the following steps in the following order or in a different order: shot peening of the magazine bar blank and/or frictional grinding of the shoot peened magazine bar blank, preferably to a surface roughness of Ra 25 or less, preferably Ra 22.5 or less, preferably Ra 20 or less, preferably Ra 17.5 or less, preferably Ra 15.0 or less, preferably Ra 12.5 or less, preferably Ra 10.0 or less, preferably Ra 9.0 or less, preferably Ra 8.0 or less, preferably Ra 7.5 or less, preferably Ra 7.0 or less, preferably Ra 6.5 or less, preferably Ra 6.0 or less, preferably Ra 5.5 or less, preferably Ra 5.0 or less, preferably Ra 4.5 or less, preferably Ra 4.0 or less, preferably Ra 3.5 or less, preferably Ra 3.0 or less, preferably Ra 2.5 or less, preferably Ra 2.25 or less, preferably Ra 2.0 or less, preferably Ra 1.75 or less, preferably Ra 1.5 or less, preferably Ra 1.25 or less, preferably 1.0 or less according to DIN EN ISO 4287:2010 (in µm). In some embodiments, the method may comprise the step of; thermo-chemically smoothing the magazine bar.

It shall be understood that linking the base material is any form of operation that establishes a bond between particles of the base material to create a solid shape. For example, the base material may be adhered to each other by applying a glue or the base material may be welded together by a laser. The additive manufacturing process preferably is a selective laser sintering process. The base material preferably is a powdered base material. In a particularly preferred further development of the method, no support structures adhering to the magazine bar blank are provided or manufactured alongside the blank during additive manufacturing of the magazine bar blank. Shot peening removes inconsistencies on the surface of the blank. Moreover, shoot peening may increase stability of the blank. Preferably glass beads are used for shot peening the magazine bar blank. In the art, frictional grinding is often also called vibratory grinding or barrel finishing. By shot peeing and frictional grinding of the magazine bar blank (after additive manufacturing thereof), a particularly smooth surface may be achieved. Through this, a risk of closure clips jamming a storage region of the final magazine bar is significantly reduced. The step of thermo-chemically smoothing may further increase a surface quality.

In a preferred further development, the base material is a powdered base material and selective laser sintering is used for additive manufacturing the magazine bar blank. Selective laser sintering allows for fast production of a stabile magazine bar. Moreover, the powdered base material removes the necessity to incorporate support structures during manufacturing such that subsequent support removal steps are not required.

Preferably, the optional step of thermo-chemically smoothing the magazine bar comprises the sub-steps of: immersing the magazine bar blank into a liquid having a pH in a range of 0 to below 7; removing the magazine bar blank from the solution; and heating the magazine bar blank to a temperature between 20°C and a melting temperature of the base material. By immersing the magazine bar blank into the liquid having a pH below 7, preferably 6.5 or less, preferably 6 or less, preferably 5.5 or less, preferably 5 or less, preferably 4.5 or less, preferably 4 or less, preferably 3.5 or less, the surface of the magazine bar is softened and surface roughness may be removed. Subsequently, heating the magazine bar further smooths the softened surfaces. A liquid having a pH below 7 is acidic. The solution may be an aqueous solution of an acid.

Further advantages and preferred embodiments of the present invention will be described in the following together with the drawings listed below. The expressions "*left*", "*right*", *"below*" and *"above"* used in the following description are referred to the drawings in an alignment such that the reference numbers and the notation of the figures used can be read in normal orientation. The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed herein after. Further, the features described in the description, the drawings and the claims disclosing the invention may be essential for the invention considered alone or in combination. In particular, any reference signs in the claims shall not be construed as limiting the scope of the invention. The wording "comprising" does not exclude other elements or steps. The word "*a*" or *"an"* does not exclude the plurality. The wording "a *number of'* items comprising also the number 1, i.e. a single item, and further numbers like 2, 3, 4 and so forth.

It shall be understood that a preferred embodiment of the present invention can also be any combination of the dependent claims or above embodiments with the respective independent claim.
- Fig. 1: shows an isometric view of a magazine bar for a clipping machine according to a first embodiment;
- Fig. 2: shows a cross-section of the magazine bar of the first embodiment;
- Fig. 3: shows an isometric view of a second embodiment of a magazine bar for a clipping machine; and
- Fig. 4: shows a block diagram illustrating a method for producing a magazine bar.

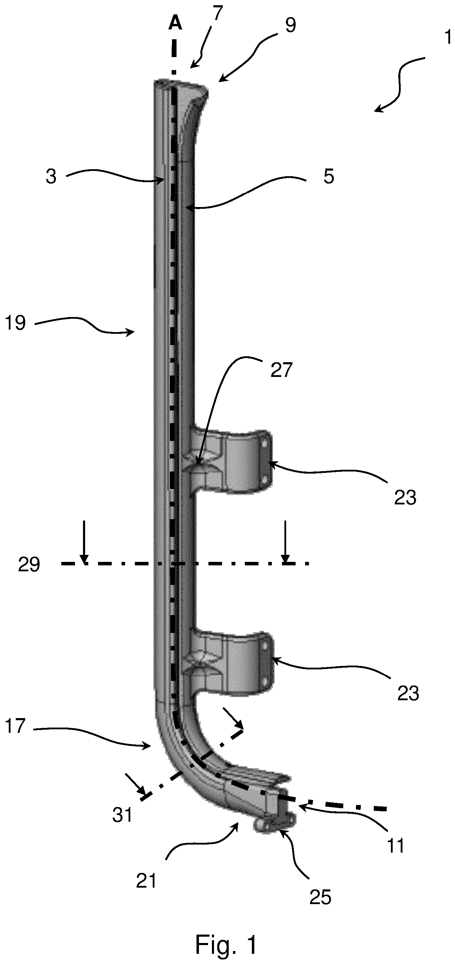

Fig. 1 shows an isometric view of a magazine bar 1 according to the invention having a storage rail 3 and a retaining rail 5. Storage rail 3 and retaining rail 5 are connected by a connecting portion 7. Magazine bar 1 extends along a central longitudinal axis A from a magazine bar inlet end 9 to a magazine bar outlet end 11. At magazine bar outlet end 11, retaining rail 5 flares out. At magazine bar inlet end 9, a distance between storage rail 3 and retaining rail 5 is increased. This facilitates insertion of closure clips 13 (not shown in Fig. 1) into a storage region 15, formed between storage rail 3 and retaining rail 5. Closure clips 13 travel along longitudinal axis A through storage region 15. While received in storage region 15, closure clips 13 are temporarily stored in magazine bar 1. At magazine bar outlet end 11, single closure clips 13 are delivered to a clipping machine for producing sausage-shaped products (not shown).

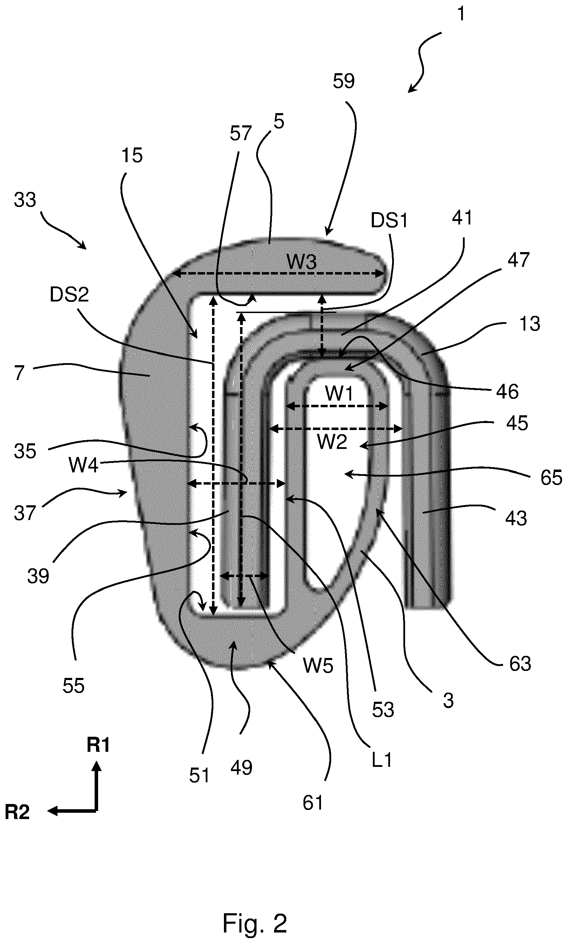

A closure clip 13 of a U-clip design is shown in Fig. 2. Closure clip 13 comprises a back or bottom 41 connecting a first leg 39 and a second leg 43. First leg 39 and second leg 43 extend substantially perpendicular to bottom 41. Legs 39, 43 extend substantially parallel to each other from bottom 41 such that closure clip 13 has a cross-section that resembles the shape of the letter U. In other embodiments, legs 39, 43 could flare out so that the cross-section would rather resemble the shape of the letter V. To form a clip strip, multiple clips 13 can be stacked on top of each other in a direction perpendicular to the plane defined by legs 39, 43 as shown in Fig. 2. Multiple clips 13 of such a stack are then usually connected at their respective bottoms 41 with an adhesive film (not shown in Fig. 2). The adhesive film is usually applied to bottom 41 outside of the U-shape or to a side of bottom 41 opposite legs 39, 43 respectively.

In the embodiment shown in Fig. 1, central longitudinal axis A of magazine bar 1 has a bend 17. Bend 17 has a bend angle α of 90°. A first portion 19 of magazine bar 1 between magazine bar inlet end 9 and bend 17 is substantially vertical while a second portion 21 of magazine bar 1 between bend 17 and magazine bar outlet end 11 extends substantially horizontally.

For fixing magazine bar 1 to the clipping machine, magazine bar 1 comprises two fixing brackets 23 and an adapter 25. Magazine bar 1 may however comprise only a single fixing bracket 23 or more than two fixing brackets 23. In the present embodiment, fixing brackets 23 extend from retaining rail 5 and away from storage rail 3. Fixing brackets 23 of magazine bar 1 shown in Fig. 1 are angle brackets. Each fixing bracket 23 comprises a first rib 27 that stiffens the respective fixing bracket 23. First ribs 27 extend from fixing bracket 23 towards retaining rail 5. On an opposite side, each fixing bracket 23 comprises a second rib. Since magazine bar 1 or its longitudinal axis A respectively comprises bend 17, clips 13 may be stored efficiently in vertical first portion 19 while still allowing closure clips 13 to be delivered horizontally to the clipping machine. The weight of closure clips 13 received in storage region 15 in vertical first portion 19 and/or in bend 17 push closure clips 13 received in second portion 21 of magazine bar 1 to the clipping machine.

As shown in Fig. 1, storage rail 3, retaining rail 5 and connecting portion 7 are substantially uniform along central longitudinal axis A of magazine bar 1. With the exception of magazine bar inlet end 9 having flared out retaining rail 5, magazine bar outlet end 11 having adapter 25 and the sections comprising fixing brackets 23, all cross-sections of magazine bar 1 are substantially identical along longitudinal axis A. Fig. 2 shows such a cross-section of magazine bar 1 that is taken in plane 29 shown in Fig. 1. Plane 29 is perpendicular to central longitudinal axis A.

Storage rail 3, retaining rail 5, connecting portion 7, fixing brackets 23 and adapter 25 of magazine bar 1 according to the first embodiment shown in Fig. 1 are integrally formed by additive manufacturing. In particular, magazine bar 1 is formed by selective laser sintering of a Polyamide (PA6) powdered base material. Additive manufacturing allows the cross-section of magazine bar 1 to remain substantially uniform. A cross-section in plane 29 located in first portion 19 may thus be substantially identical to a cross-section of magazine bar 1 in a second plane 31 perpendicular to central longitudinal axis A and located in bend 17.

Fig. 2 illustrates the cross-section of magazine bar 1 in plane 29. As shown in Fig. 2, storage rail 3, retaining rail 5 and connecting portion 7 are integrally formed into a magazine bar main body 33. In the cross-section of Fig. 2, magazine bar main body 33 has a shape that resembles the capital letter G (without the small horizontal cross bar) or C. Fig. 2 further shows closure clip 13 partially received in storage region 15 of magazine bar 1. Storage rail 3, retaining rail 5 and connecting portion 7 define an inner contour 35 and an outer contour 37. Inner contour 35 defines storage region 15 for receiving closure clip 13. In the disclosed embodiment, first leg 39 and back 41 of closure clip 13 are received in storage region 15 while a second leg 43 of closure clip 13 extending from an opposite side of back 41 than first leg 39 is located outside storage region 15. Closure clip 13 is substantially U-shaped with legs 39, 43 extending parallel from back 41. In other embodiments, the legs 39, 43 may also flare out from the back 41.

Storage region 15 is substantially L-shaped or shaped like an inverse capital letter L, respectively. A first portion of storage region 15 is defined between storage rail 3 and retaining rail 5. Retaining rail 5 is arranged opposite storage rail 3 and spaced apart therefrom in a first direction R1. This section of storage region 15 between storage rail 3 and retaining rail 5 receives back 41 of closure clip 13. A first storage depth DS1 is larger than a corresponding depth of back 41 so that closure clip 13 can move through storage region 15 along central longitudinal axis A. Legs 39, 43 of closure clip 13 extend on both sides of a guide portion 45 of storage rail 3. Guide portion 45 of storage rail 3 is received in the U-shape of closure clip 13 and guides clip 13 along central longitudinal axis A. For guiding closure clip 13, guide portion 45 comprises a guiding surface 46. A storage width W1 of guide portion 45 is smaller than a corresponding inner clip width W2 of closure clip 13 such that closure clip 13 can freely slide through storage region 15.

Guide portion 45 extends in first direction R1 from a head 47 towards a transition portion 49. Transition portion 49 extends from guide portion 45 towards connecting portion 7. In the embodiment shown in Fig. 2, transition portion 49 generally extends in a second direction R2 perpendicularto first direction R1. It should however be noted, that transition portion 49 may also extend at another angle to first direction R1. Transition portion 49 may also be omitted in other embodiments of magazine bar 1. An inner transition wall section 51 of transition portion 49 extends at least approximately perpendicular to a first wall section 53 of guide portion 45. Inner transition wall section 51 and first wall section 53 of guide portion 45 define part of inner contour 35. Both wall sections 51, 53 are connected with a small radius. On an opposite side, first wall section 53 is connected to head 47 of storage rail 3.

Connecting portion 7 extends from transition portion 49 of storage rail 3 and connects storage rail 3 to retaining rail 5. In the embodiment shown in Fig. 2, connecting portion 7 extends in first direction R1 and has a connecting portion wall section 55 that is substantially parallel to first wall section 53 of guide portion 45 of storage rail 3. Connecting portion 7 widens towards retaining rail 5. A wall thickness of connecting portion 7 increases at least along a portion of connecting portion 7 towards retaining rail 5. Through this, stability of connecting portion 7 is increased. In other embodiments, connecting portion 7 may have two parallel sides or it may taper towards retaining rail 5.

Retaining rail 5 extends in second direction R2 from connecting portion 7. An inner retaining wall 57 of retaining rail 5 is parallel to head 47 of storage rail 3 and parallel to innertransition wall section 51. Retaining rail 5 prevents closure clip 13 from falling off the storage rail 3 or guide portion 45 of storage rail 3 respectively in first direction R1. Inner retaining wall 57, designed like a roof, abuts back 41 of closure clip 13 and prevents removal of closure clip 13 from storage region 15 in first direction R1. Retaining rail 5 has a retaining width W3 that is larger than corresponding storage width W1 of storage rail 3. The larger retaining width W3 prevents tilting of closure clip 13. In the second direction R2, retaining rail 5 and storage rail 3 extend from the same plane so that retaining rail 5 only protrudes from guide portion 45 of storage rail 3 on one side. This allows easy access of storage region 15 from the outside. An operator of a clipping machine may easily remove closure clips 15 from storage region 15 if necessary.

An outer retaining wall 59 of retaining rail 5 opposite inner retaining wall 57 is substantially dome shaped. The dome shape facilitates manufacturing of the magazine bar 1 and increases its strength.

As mentioned before, storage region 15 is defined by inner contour 35 of magazine bar 1 and has an L-shape. In the embodiment shown in Fig. 2, inner contour 35 comprises head 47, first wall section 53 of guide portion 45, inner transition wall section 51 of transition portion 49, connecting portion wall section 55 and inner retaining wall 57. Head 47, inner transition wall section 51 and inner retaining wall 57 are substantially parallel to each other and to second direction R2. First wall section 53 of guide portion 45 and connecting portion wall section 55 are parallel to each other and extend in first direction R1. In the present embodiment, first wall section 53 and connecting portion wall section 55 are therefore perpendicular to the remaining parts of inner contour 35. All transitions between the walls or wall sections defining inner contour 35 are rounded. This increases the strength of magazine bar 1. Some or all of the radii may also be replaced by sharp corners. In the present embodiment, a clear width W4 of storage region 15 is larger tahn first storage depth DS1 of storage region 15. Clear width W4 is defined between first wall section 53 of guide portion 45 and connecting portion wall section 55. It is larger than corresponding leg width W5 of closure clip 13 so that clip 13 can freely slide along central longitudinal axis A through storage region 15. Clear width W4 is smaller than inner clip width W2. Inner contour 35 is shaped so that closure clip 13 received in storage region 15 may slightly tilt around central longitudinal axis A but so that larger tilts of preferably more than 20° or more than 30° are prevented by inner contour 35 abutting closure clip 13 or its first leg 39 respectively. A second storage depth DS2 of storage region 15 that is measured parallel to first storage depth DS1 is larger than a corresponding leg length L1 of closure clips 13 to be received in storage region 15. This prevents first leg 39 of closure clip 13 from rubbing against inner contour 35. Wear on inner contour 35 is decreased and a life time of magazine bar 1 is increased.

Outer contour 37 of magazine bar 1 is continuous. It is defined by outer retaining wall 59, a wall of connecting portion 7 opposite connecting portion wall section 55, an outer transition wall section 61 and a second wall section 63 of guide portion 45 of storage rail 3 opposite first wall section 53. All of these walls or wall sections 59, 61, 63 continuously transition into each other so that outer contour 37 of magazine bar 1 has a substantially organic shape. Since outer contour 37 is continuous, it does not comprise any sharp corners when viewed on a macroscopic scale or with the bare eye. It shall however be noted, that even a continuous contour may have sharp corners or inconstancies when viewed on a microscopic basis. Preferably, a continuous contour has no radii that are smaller than 2 mm. Outer transition wall section 61 is substantially arc shaped such that a thickness of transition portion 49 increases and then decreases along second direction R2.

As shown in Fig. 2, storage rail 3 tapers away from retaining rail 5. In this embodiment, a width of guide portion 45 decreases in first direction R1 and away from retaining rail 5. Storage width W1 of storage rail 3 at head 47 forms the largest width of storage rail 3. Here, first wall section 53 is substantially straight while opposite second wall section 63 of storage rail 3 tapers away from retaining rail 5. First wall section 53 is oriented towards a retaining side of storage rail 3. The tapered shape of storage rail 3 allows closure clip 13 received in storage region 15 to slightly tilt around the central longitudinal axis A. This facilitates loading closure clips 13 into storage region 15 and/or removing closure clips 13 from storage region 15. Moreover, second leg 45 of closure clip 13 located outside of storage region 15 is prevented from rubbing against outer contour 37 of magazine bar 1. A lifetime of magazine bar 1 may be increased. Furthermore, scratches on outer contour 37 may be prevented. Food residues and dirt can accumulate in scratches and provide a possible hygienic risk. The tapered shape of storage rail 3 reduces health risks and facilitates cleaning of the magazine bar 1.

The cross-section shown in Fig. 2 illustrates that magazine bar 1 is asymmetric. In contrast to known symmetric magazine bars, magazine bar 1 of the preferred embodiment 1 has an asymmetric shape to an axis extending along first direction R1. In magazine bar 1 of the present embodiment, connecting portion 7 extends only on a first side (retaining side) of storage rail 3. Moreover, storage rail 3 tapers asymmetrically and transition portion 49 extends only towards connecting portion 7. Retaining rail 5 asymmetrically extends with respect to storage rail 3. In this embodiment, retaining rail 5 extends on only one side of storage rail 3 in second direction R2. It shall be noted that only connecting portion 7, only guide portion 45, only transition portion 49 and or only retaining rail 5 could cause the asymmetry of magazine bar 1 in other preferred embodiments. For example, guide rail 1 could have an asymmetric connecting portion 7 while guide portion 45 has a substantially rectangular and symmetric cross-section. Due to the asymmetrical shape of magazine bar 1, second leg 43 of closure clip 13 is located outside storage region 15. An operator can easily grab second leg 43 for removing closure clip 13 from storage region 15.

It shall be noted, that magazine bars 1 having symmetric cross-sections are also preferred. For example, a second connecting portion being substantially symmetrical to connecting portion 7 could extend on an opposite side of magazine bar 1 and/or storage region 15 could be substantially U-shaped instead of L-shaped. Closure clips 13 could then be fully received in storage region 15.

Fig. 2 further shows that storage rail 3 is not completely solid but comprises a chamber 65. Chamber 65 is located inside guide portion 45 of storage rail 3. First wall section 53, head 47 and second wall section 63 completely enclose chamber 65. In the present embodiment and preferably, chamber 65 extends along longitudinal axis A substantially through entire storage rail 3 and is closed at magazine bar inlet end 9 and magazine bar outlet end 11 by respective end walls. Chamber 65 is therefore completely closed off from the environment. No dirt or food residues can enter closed chamber 65 during operation of the clipping machine. Moreover, no cleaning liquids or the like can enter into closed chamber 65 during cleaning of the clipping machine which usually takes place once a day. This facilitates cleaning of magazine bar 1 and reduces hygienic risks. Additionally or alternatively, magazine bar 1 may also comprise one or more cavities in retaining rail 5 and/or in connecting portion 7.

Fig. 2 shows only the walls of magazine bar 1 that where formed during the additive manufacturing process of magazine bar 1 by fusing or linking a base material. Even though not shown in Fig. 2, closed chamber 65 of the preferred embodiment is at least partially filled with unlinked base material. Preferably, at least 70%, preferably at least 75%, preferably at least 80%, preferably at least 85%, preferably at least 90% of a chamber volume of closed chamber 65 is filled with unlinked base material. The unlinked base material supports first and second wall section 53, 63 and prevents chamber 65 from collapsing when it is subjected to high forces. Since the base material in closed chamber 65 is not linked during manufacturing of magazine bar 1, manufacturing time is significantly reduced. Moreover, the unlinked base material dampens vibrations of magazine bar 1 and may significantly reduce vibration induced noise. As mentioned above, storage width W1 approximately equals an inner width of closure clips 13 to be stored thereon. If storage rail 3 were formed from solid material, manufacturing time would be increased even though a solidly formed guide portion 45 is not necessary in all cases from a strength perspective. For reducing manufacturing time of magazine bar 1, arranging closed chamber 65 in guide portion 45 of storage rail 3 is therefore particularly preferable. Additionally or alternatively, transition portion 49, connecting portion 7 and/or retaining rail 5 may comprise a closed chamber that may be at least partially filled with unlinked base material or empty.

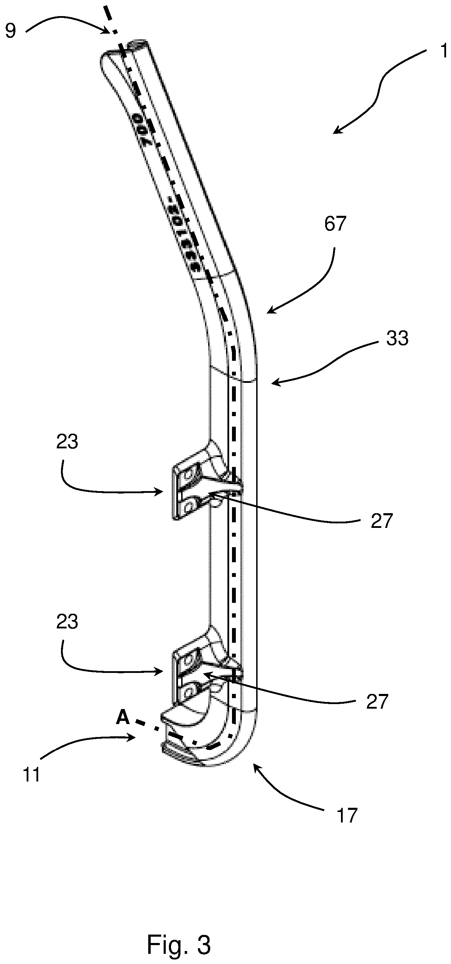

Fig. 3 shows a second embodiment of a magazine bar 1 according to the invention. The design of magazine bar 1 according to the second embodiment is substantially similar to the design of magazine bar 1 according to the first embodiment shown in Fig. 1. For example, magazine bar 1 also comprises a storage rail 3, a retaining rail 5 and a connecting portion 7. A cross-section of magazine bar 1 according to the second embodiment is identical to the cross-section of magazine bar 1 of the first embodiment as shown in Fig. 2. Magazine bar 1 shown in Fig. 3 or its longitudinal axis A respectively has a second bend 67. Second bend 67 is oriented in the same direction as first bend 17. Second bend 67 allows for a more compact design and may facilitate insertion of closure clips 13 into storage region 15 of magazine bar 1. The second embodiment of magazine bar 1 has a more compact design than magazine bar 1 of the first embodiment. Magazine bar outlet 13 is formed by an outlet end of first bend 17. Magazine bar 1 according to the second embodiment does not comprise a second portion 21 arranged between first bend 17 and magazine bar outlet end 11. Closure clips 13 are therefore directly delivered to a clipping machine to which magazine bar 1 is attached from first bend 17. As mentioned above, multiple closure clips 13 are usually connected at their respective backs 41 to form a clip strip. Closure clips 13 of such a clip strip can fan out in first bend 17 so that their legs 39, 43 separate from each other while their backs 41 stay connected. When closure clips 13 are directly delivered to the clipping machine from first bend 17, this separation of the clips 13 legs 39, 43 may facilitate the clipping process and/or may reduce manufacturing downtimes.

Fixing brackets 23 of magazine bar 1 according to the second embodiment are substantially straight while fixing brackets 23 of magazine bar 1 according to the first embodiment are angle brackets. In the second embodiment, fixing brackets 23 of magazine bar 1 laterally extend from main body 33 of magazine bar 1. The laterally extending fixing brackets 23 extend substantially transverse to a direction of first bend 17. Since magazine bar 1 shown in Fig. 3 does not comprise a second portion 21, no extension of fixing brackets 23 in the direction of first bend 17 (which is identical to first direction R1 in this embodiment) is needed. It shall however be noted, that laterally extending fixing brackets 23 are also preferred for magazine bars 1 comprising a second portion 21. It shall further be noted, that a magazine bar 1 may comprise a second bend 67 of its longitudinal axis A when fixing brackets 23 have a different design than the one shown in Fig. 3 and/or if magazine bar 1 comprises a second portion 21. Moreover, second bend 67 could have another orientation than first bend 17.

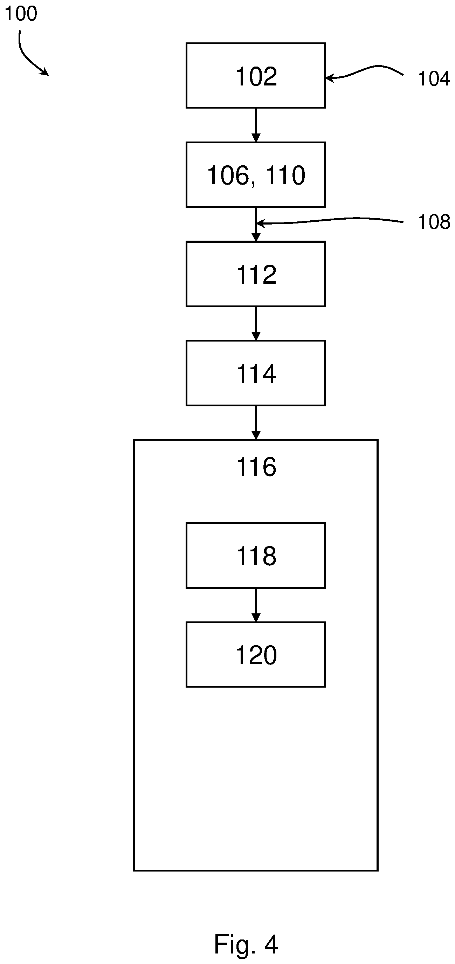

Fig. 4 illustrates a method 100 for producing a magazine bar 1 according to the first or second embodiment. Method 100 for producing magazine bar 1 is also referred to as manufacturing method 100. As mentioned above, magazine bar 1 is preferably formed by additive manufacturing. The method 100 comprises a first step of providing 102 a base material 104. In the present embodiment the base material is a Polyamide granulate comprising a filler of glass particles. In a subsequent second step of additive manufacturing 106, a magazine bar blank 108 is formed from base material 104 by selectively linking base material 104. In particular, base material 104 is fused together by selective laser sintering 110 to form magazine bar blank 108. After that, loose or unlinked base material (that is not contained in closed chambers) is removed. Magazine bar blank 108 is then shot peened 112 with glass beads to smooth the surfaces of magazine bar blank 108. Moreover, shot peening 112 may improve material properties of magazine bar 1. After shot peening 112, frictional grinding 114 is performed on shot peened magazine bar blank 108. In the art, frictional grinding 114 is also referred to as vibratory grinding or barrel finishing. Frictional grinding 114 further increases the surface quality of magazine bar blank 108. In a final step of method 100, magazine bar blank 108 is thermo-chemically smoothed (thermos-chemically smoothing 116) to receive magazine bar 1. Final magazine bar 1 has very smooth surfaces so that jamming of closure clips 13 in storage region 15 is effectively prevented. Moreover, the smooth surfaces facilitate cleaning of magazine bar 1 and therefore ensure hygienic production. It shall be noted, that only shot peeing 112 and/or frictional grinding 114 may be performed on the magazine bar blank 108 or that the magazine bar blank 108 may form the final magazine bar 1. In particular, the step of thermo-chemically smoothing 116 may be omitted. A smooth magazine bar 1 that facilitates cleaning and prevents jamming of closure clips 13 may be achieved without the step of thermos-chemically smoothing 116. Manufacturing of the magazine bar 1 may therefore be finished after additive manufacturing 106, after shot peening 112 or after frictional grinding 114. Thermo-chemically smoothing 116 may further increase surface quality.

Thermo-chemically smoothing 116 of magazine bar 1 comprises multiple sub-steps. First immersing 118 of magazine bar blank 108 into a liquid having a pH value in a range of 0 to below 7 is performed. Immersing 118 magazine bar blank 108 in an acidic liquid removes small unevenness of the magazine bar surface and/or a top layer of the linked base material is softened. Preferably, magazine bar blank 108 is immersed for 5 minutes or more. The pH value of the liquid preferably lies in a range of 0 to 6, particularly preferred 2 to 5. Magazine bar blank 108 is then removed from the solution. Afterwards, magazine bar blank 108 may be washed to remove residual immersion liquid. In the present embodiment of method 100, heating 120 of magazine bar blank 108 to a temperature between 50°C and the melting temperature of base material 104 is performed as a last step. Polyamide has a melting temperature of about 200 °C such that the temperature range of the heating process of the present embodiment of method 100 is 50°C to 200°C, preferably 100°C to 150°C. After cooling, magazine bar 1 is finished. It shall however be noted, that method 100 may comprise additional steps that may be performed before, parallel to or after the steps described above. Thermo-chemically smoothing 116 of magazine bar 1 may also comprise additional sub-steps.

### LIST OF REFERENCE SIGNS (part of the description)

- 1: magazine bar
- 3: storage rail
- 5: retaining rail
- 7: connecting portion
- 9: magazine bar inlet end
- 11: magazine bar outlet end
- 13: closure clip
- 15: storage region
- 17: (first) bend
- 19: first portion of the magazine bar
- 21: second portion of the magazine bar
- 23: fixing bracket
- 25: adapter
- 27: first rib
- 29: plane perpendicular to the longitudinal axis
- 31: second plane
- 33: magazine bar main body
- 35: inner contour
- 37: outer contour
- 39: first leg
- 41: bottom
- 43: second leg
- 45: guide portion
- 46: guiding surface
- 47: head
- 49: transition portion
- 51: inner transition wall section
- 53: first wall section of the storage rail
- 55: connecting portion wall section
- 57: inner retaining wall
- 59: outer retaining wall
- 61: outer transition wall section
- 63: second wall section of the storage rail
- 65: closed chamber
- 67: second bend
- 100: method
- 102: providing a base material
- 104: base material
- 106: additive manufacturing
- 108: magazine bar blank
- 110: selective laser sintering
- 112: shot peening
- 114: frictional grinding
- 116: thermo-chemically smoothing
- 118: immersing
- 120: Heating
- A: central longitudinal axis
- DS1: storage depth
- DS2: second storage depth
- L1: leg length
- R1: first direction
- R2: second direction
- W1: storage width
- W2: inner clip width
- W3: retaining width
- W4: clear width
- W5: leg width

## Claims

1. A magazine bar (1) for a clipping machine for temporarily storing and delivering closure clips (13) to the clipping machine, wherein the magazine bar (1) has a longitudinal axis (A) extending from a magazine bar inlet end (9) to a magazine bar outlet end (11) and comprises
a storage rail (3) having a guiding surface (46) for guiding closure clips; and
a retaining rail (5) opposite the storage rail (3),
wherein the retaining rail (5) is spaced apart from the storage rail (3) in a first direction (R1) extending at least approximately perpendicular to the longitudinal axis (A) such that a storage region (15) for closure clips (13) is formed at least between the storage rail (3) and the retaining rail (5), and
wherein at least the storage rail (3) and the retaining rail (5) of the magazine bar (1) are integrally formed.

2. The magazine bar (1) according to claim 1, wherein the magazine bar (1) is formed from a base material (104), preferably a plastic base material (104), by additive manufacturing.

3. The magazine bar (1) according to claim 2, wherein the magazine bar (1) is formed by additive manufacturing from a powdered base material (104).

4. The magazine bar (1) according to any of claims 1 to 3, wherein the storage rail (3) comprises a closed chamber (65).

5. The magazine bar (1) according to claims 3 and 4, wherein the closed chamber (65) is at least partially filled with unlinked base material (104).

6. The magazine bar (1) according to any of claims 1 to 5, wherein a retaining width (W3) of the retaining rail (5) perpendicular to the first direction (R1) is equal or larger than a corresponding storage width (W1) of the storage rail (3).

7. The magazine bar (1) according to any of claims 1 to 6, wherein the storage rail (3) tapers away from the retaining rail (5).

8. The magazine bar (1) according to any of claims 1 to 7, wherein the magazine bar (1) has a continuous outer contour (37) in at least one cross-section of the magazine bar (1).

9. The magazine bar (1) according to claim 8, wherein the storage region (15) is substantially L-shaped, preferably in the form of an inverse letter "L".

10. The magazine bar (1) according to any of claims 1 to 9, wherein the magazine bar (1) has an asymmetrical cross-section, wherein preferably the storage rail (3) has an asymmetrical cross-section, with a first wall section (53) being substantially straight and an opposite second wall section (63) tapering away from the retaining rail (5).

11. The magazine bar (1) according to any of claims 1 to 10, further comprising a connecting portion (7) connecting the storage rail (3) and the retaining rail (5), wherein preferably a storage rail wall thickness is smaller than a connecting portion wall thickness.

12. The magazine bar (1) according to claims 10 and 11, wherein the connecting portion (7) is arranged only on a retaining side of the storage rail (3).

13. A method (100) for producing a magazine bar (1) for a clipping machine for temporarily storing and delivering closure clips (13) to a clip inlet of the clipping machine, the method (100) comprising the steps of:
- providing (102) a base material (104); and
- additive manufacturing (106) a magazine bar blank (108) from the base material (104) by selectively linking the base material (104).

14. The method (100) of claim 13, wherein the base material (104) is a powdered base material (104) and wherein selective laser sintering (110) is used for additive manufacturing (106) the magazine bar blank (108).

15. The method (100) of claim 14, further comprising the step of smoothing the magazine bar (1), smoothing the magazine bar (1) preferably comprises the sub-steps:
- shot peening (112) of the magazine bar blank (108); and/or
- frictional grinding (114) of the magazine bar blank (108), preferably after shot peening (112).
